# FASCICULE DE BREVET EUROPEEN

(11) **EP 0 692 184 B1**
(45) Date de publication et mention de la délivrance du brevet: **10.01.2001**
(21) Numéro de dépôt: 95440040.4
(22) Date de dépôt: 04.07.1995
(51) Int. Cl.: A01D 78/12

(54) **Machine de fenaison, notamment une andaineuse, avec un organe de commande perfectionné des bras portes-fourches**
Heuwerbungsmaschine, namentlich ein Schwader, mit einem verbesserten Steuerorgan der Zinkentragarme
Haymaking machine, especially a swather, with an improved control member for the fork-carrying arms

(30) Priorité: 13.07.1994 FR 9408880
(43) Date de publication de la demande: 17.01.1996
(73) Titulaire: KUHN S.A., 67700 Saverne (FR)
(72) Inventeur: Aron, Jérôme, F-67330 Dossenheim Sur Zinsel (FR)
(74) Mandataire: Andres, Jean-Claude

(56) Documents cités:
- CH-A- 490 786
- DE-A- 2 150 555
- FR-A- 1 589 179
- FR-A- 2 095 608
- GB-A- 1 118 682
- GB-A- 1 220 337

## Description

La présente invention se rapporte à une machine de fenaison, notamment une andaineuse de végétaux, comportant un bâti qui peut être accroché à un tracteur et qui est muni de roues porteuses, lequel bâti supporte au moins un rotor d'andainage entraîné en rotation autour d'un axe vertical ou légèrement incliné par rapport à la verticale et portant des bras porte-fourches qui sont montés pivotants dans des paliers et qui sont actionnés par un organe de commande et des moyens de transmission, de telle sorte qu'ils pivotent autour de leurs axes longitudinaux respectifs durant le travail.

Une machine connue de ce genre comporte un organe de commande constitué par une came centrale fixe montée sur un axe support central du rotor (Brevet FR 1 589 179). Dans cette came se déplacent des galets qui sont montés sur des leviers solidaires des bras porte-fourches. Cette came comporte une dénivellation qui provoque un déplacement en hauteur des galets lors de chaque révolution. Les leviers sur lesquels sont montés ces galets font alors pivoter les bras porte-fourches autour de leurs axes longitudinaux respectifs, de telle sorte que les fourches soient sensiblement verticales dans la partie avant de leur trajectoire et ramassent les végétaux qui se trouvent au sol et qu'elles se lèvent dans la partie latérale de leur trajectoire et déposent les végétaux sous la forme d'un andain.

Une machine équipée d'un rotor avec une telle came de commande est limitée en ce qui concerne sa largeur de travail. En effet, les bras porte-fourches ne peuvent pas être trop allongés en raison du porte à faux et des importantes contraintes qui s'exerceraient sur leurs paliers supports, leurs galets et la came de commande. Le diamètre de cette came ne peut pas non plus être augmenté d'une manière significative afin de ne pas trop alourdir le rotor. Enfin, le frottement entre les galets des bras porte-fourches et la came de commande provoque plus ou moins rapidement une augmentation du jeu entre ces pièces, ce qui entraîne une altération de la commande des bras porte-fourches.

Une autre machine connue (Brevet FR 2 095 608) comporte un rotor qui possède un axe support central sur lequel est disposé un moyeu qui porte des bras fixes avec des douilles munies de fourches. Lesdites douilles sont montées à rotation sur les bras et sont reliées à des corps massiques qui sont également disposés sur ces bras mais qui sont déplaçables par rapport à ceux-ci. L'axe support central porte en sus un disque excentré sur lequel tourne un anneau de commande qui est relié aux corps massiques au moyen de câbles.

Lors de la rotation du rotor, les corps massiques agissent sur les douilles dans le sens d'un mouvement rotatif qui met les fourches en position de râtelage. Par ailleurs, les câbles tirent les corps massiques vers le centre du rotor sur une partie de leur trajectoire, de sorte qu'ils fassent pivoter les douilles et les fourches vers le haut pour qu'elles déposent les produits sous la forme d'un andain.

La disposition des bras porte-fourches et du disque avec l'anneau de commande au centre du rotor ne convient pas pour la réalisation d'une machine ayant une grande largeur de travail et pouvant travailler correctement à une vitesse d'avancement élevée.

La présente invention a pour but de proposer une machine de fenaison ne comportant pas ces inconvénients. Elle doit notamment permettre d'obtenir une machine avec un rotor pouvant avoir une importante largeur de travail tout en assurant un râtelage correct même lorsque la vitesse d'avancement est élevée.

A cet effet, une importante caractéristique de l'invention consiste en ce que le rotor d'andainage se compose d'un anneau qui est monté sur des galets reliés au bâti de manière à pouvoir tourner autour de l'axe géométrique et qui porte les bras porte-fourches dirigés vers l'extérieur, que l'organe de commande est constitué par une courroie ou une chaîne qui est guidée au moyen de poulies portées par le bâti et de pattes qui sont solidaires de l'anneau, que les moyens de transmission pour chaque bras porte-fourches sont constitués par une manivelle qui est articulée par rapport à l'anneau et est déplaçable au moyen de la courroie et par un mécanisme de renvoi qui relie ladite manivelle au bras porte-fourches correspondant en vue de le faire tourner autour de son axe longitudinal et que le rotor d'andainage comporte des moyens pour amener les bras porte-fourches en position de râtelage sur une partie avant de l'anneau.

La courroie de commande qui est liée au rotor et non pas à un axe support central, peut se situer sur un grand diamètre. De ce fait, les bras porte-fourches ne doivent plus obligatoirement s'étendre jusqu'à proximité du centre du rotor. Il est ainsi possible d'obtenir une importante largeur de travail avec des bras porte-fourches relativement courts. Cela permet aussi d'équiper le rotor d'un plus grand nombre de bras porte-fourches afin qu'ils assurent un râtelage correct de la totalité des végétaux même lorsque la vitesse d'avancement est élevée.

Par ailleurs, cette courroie de commande est relativement plus légère qu'une came de guidage fixée sur un axe central du rotor. Cela est particulièrement avantageux dans le cas d'un rotor de grande largeur qui nécessiterait une came avec un important diamètre. Cette courroie est également soumise à moins de frottements qu'une came fixe dans laquelle se déplacent des galets. Elle assure ainsi constamment une commande parfaite des bras porte-fourches.

Selon une autre caractéristique de l'invention, la courroie de commande assure en sus l'entraînement en rotation du rotor. Cela permet d'éviter l'emploi de moyens supplémentaires spécialement destinés audit entraînement.

D'autres caractéristiques et avantages de l'invention ressortiront de la description ci-après d'un exemple de réalisation non limitatif de l'invention avec référence aux dessins annexés dans lesquels :
- La figure 1 représente une vue de dessus d'une machine selon l'invention.
- La figure 2 représente une vue de côté, avec une coupe partielle, de la machine selon l'invention.
- La figure 3 représente une vue de détail d'un bras porte-fourches en position de râtelage.
- La figure 4 représente une vue de détail d'un bras avec les fourches relevées.
- La figure 5 représente une coupe suivant le plan V-V de la figure 4.
- La figure 6 représente une vue de dessus d'une machine selon un autre exemple de réalisation.

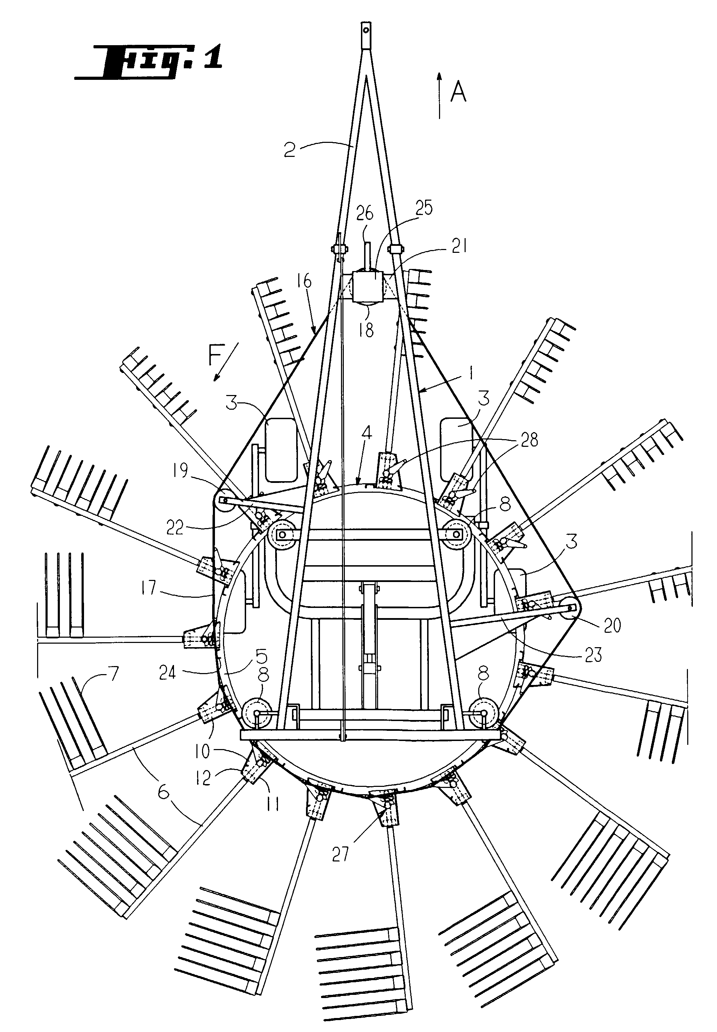

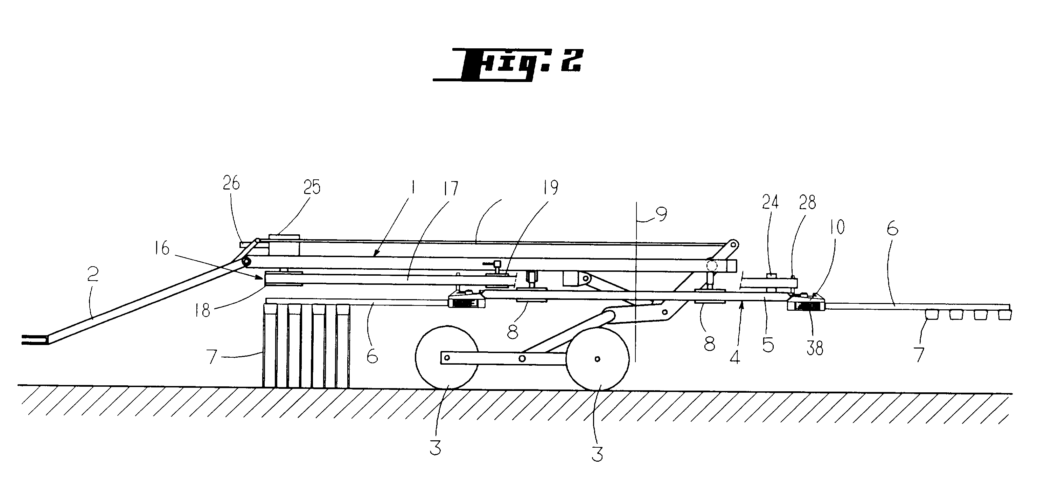

Telle qu'elle est représentée sur les figures 1 et 2, l'andaineuse selon l'invention comporte un bâti (1) qui peut être accroché à un tracteur, non représenté, au moyen d'un timon (2). Ce bâti (1) est muni de roues porteuses (3) qui roulent sur le sol. Il supporte un rotor d'andainage (4) se composant notamment d'un anneau (5) sur lequel sont montés des bras (6) dirigés vers l'extérieur. Chacun de ces bras (6) porte des fourches (7) à son extrémité extérieure.

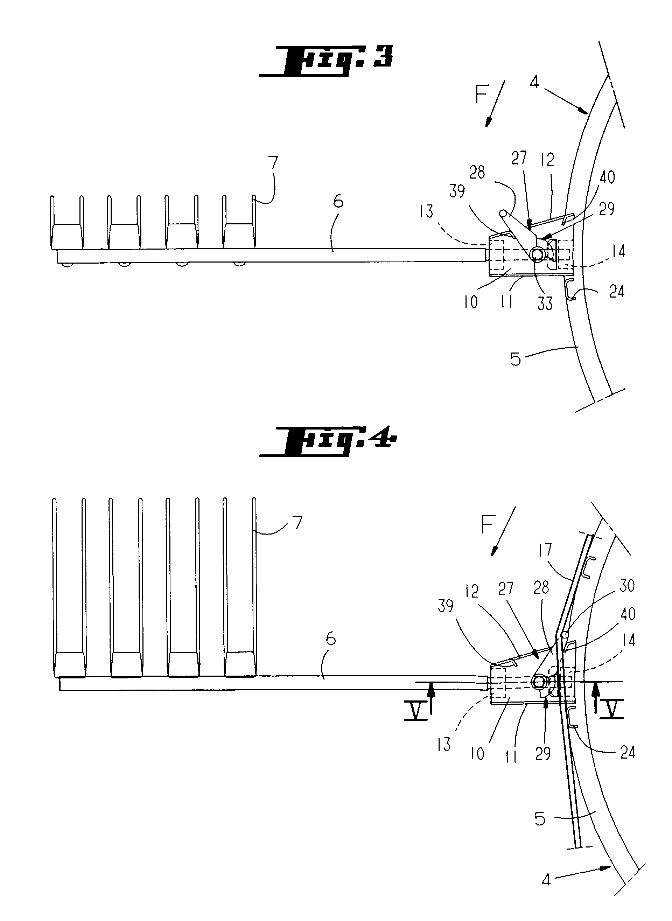

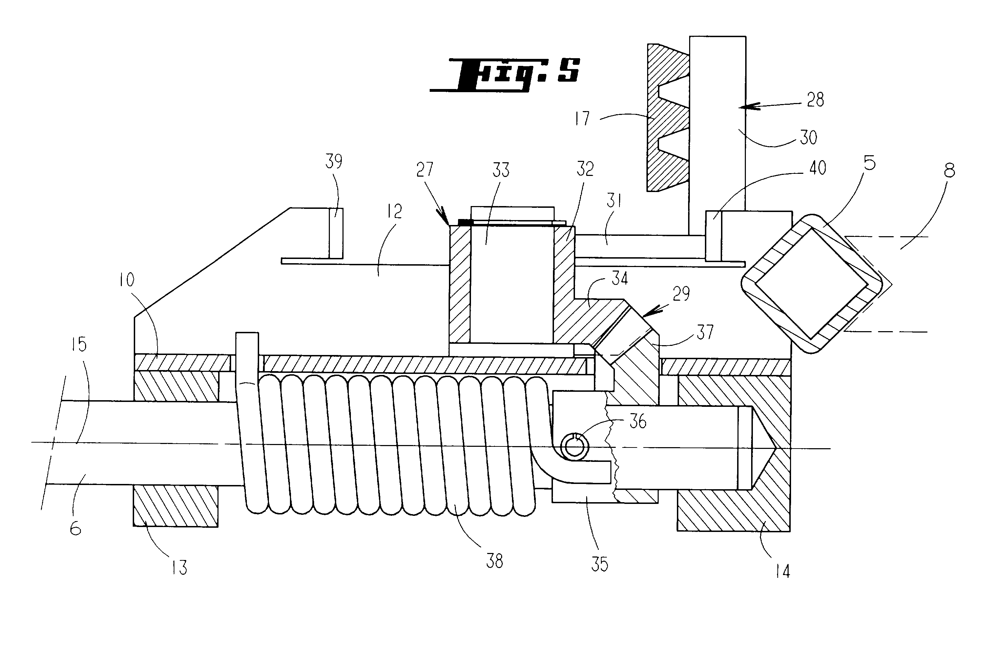

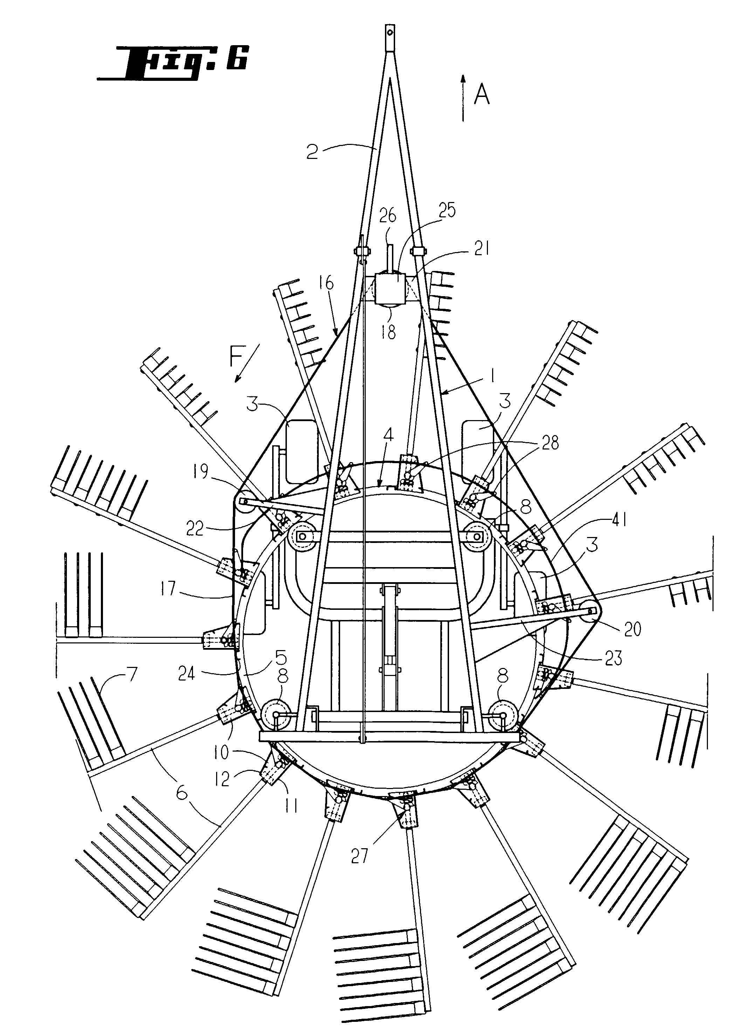

L'anneau (5) est monté sur quatre galets (8) qui sont reliés au bâti (1) et sont disposés dans un plan sensiblement horizontal. Ledit anneau (5) peut tourner sur ces galets (8) autour d'un axe géométrique central (9) qui est vertical ou légèrement incliné par rapport à la verticale. Il ressort notamment de la figure 5 que cet anneau (5) a une section carrée et qu'il est agencé de telle sorte qu'il soit guidé par les galets (8) sur deux de ses côtés. L'anneau (5) porte à intervalles réguliers sur sa périphérie des supports (10) pour les bras porte-fourches (6). Ces supports (10) sont constitués par des plaques avec deux bords (11 et 12) dirigés vers le haut. Ces plaques-supports (10) sont soudées sur l'anneau (5) et portent deux paliers (13 et 14) dans lesquels s'étendent les bras (6). Entre ces bras (6) et lesdits paliers (13 et 14) il est prévu un léger jeu de sorte qu'ils puissent pivoter autour de leurs axes longitudinaux (15) respectifs.

Le rotor (4) comporte par ailleurs un organe de commande (16) des bras porte-fourches (6). Dans l'exemple représenté, cet organe de commande (16) est constitué par une courroie (17). Il pourrait aussi être constitué par une chaîne ou une autre pièce analogue. Cette courroie (17) est guidée au moyen de trois poulies (18, 19 et 20) qui sont montées sur des supports (21, 22 et 23) solidaires du bâti (1) et de pattes (24) verticales solidaires de l'anneau (5). La poulie (18) se situe à l'avant de l'anneau (5), près de l'extrémité la plus avancée du bâti (1). Elle est montée sur un arbre moteur qui peut être entraîné en rotation par exemple à partir de l'arbre de prise de force du tracteur. A cet effet, cet arbre moteur est lié à un carter de renvoi (25) muni d'un second arbre (26) qui peut être relié à l'arbre de prise de force par un arbre de transmission intermédiaire. Les deux poulies (19 et 20) se situent l'une sur le côté gauche et l'autre sur le côté droit du bâti (1). Leurs supports (22 et 23) peuvent être déplacés le long de ce bâti (1) et être fixés en différents endroits.

La courroie (17) passe sur les pattes (24) de l'anneau (5) sur la partie arrière de celui-ci. Grâce à ce contact avec un grand nombre de ces pattes (24), elle entraîne l'anneau (5) en rotation autour de l'axe géométrique (9) lorsqu'elle est elle-même entraînée par la poulie (18).

Entre la courroie (17) et chaque bras porte-fourches (6) sont disposés des moyens de transmission (27) qui actionnent lesdits bras (6). Ces moyens (27) sont constitués par une manivelle (28) et un mécanisme de renvoi (29) (voir figure 5). Chaque manivelle (28) se compose d'un levier (30) sensiblement vertical qui se situe au niveau de la courroie (17), d'un bras sensiblement horizontal (31) et d'une douille (32). Cette dernière est montée pivotante sur un axe (33) sensiblement vertical qui est solidaire du support (10) correspondant. La douille (32) comporte un secteur denté (34) qui est orienté vers le bas et qui s'étend sur environ un tiers de sa périphérie. Sur chaque bras porte-fourches (6) est fixée une bague (35) au moyen d'une goupille (36). Cette bague (35) comporte un secteur denté (37) qui est dirigé vers le haut et qui s'étend sur environ un tiers de sa périphérie. Ce secteur (37) engrène avec le secteur (34) précité de la douille (32). Sur chaque bras porte-fourches (6) est en sus monté un ressort de torsion (38). Celui-ci s'appuie d'une part sur la goupille (36) et d'autre part sur le support (10). Il exerce ainsi une pression sur le bras porte-fourches (6) qui tend à le faire pivoter autour de son axe longitudinal (15), de sorte qu'il occupe la position de râtelage représentée sur la figure 3. Le support (10) comporte sur son bord (12) qui est dirigé vers le haut deux butées (39 et 40) qui limitent les déplacements de la manivelle (28). Sur la partie avant (vu dans le sens d'avancement (A)) de l'anneau (5) les manivelles (28) sont plaquées contre les premières butées (39) par les ressorts (38). Ceux-ci agissent sur les bras (6) et, à travers les deux secteurs dentés (37 et 34), sur lesdites manivelles (28). Dans cette position, les fourches (7) des bras (6) sont sensiblement verticales. Sur la partie arrière de l'anneau (5) la courroie (17) est en contact avec les leviers (30) des manivelles (28). Elle déplace ces dernières autour de leurs axes de pivotement (33) et les plaque contre les secondes butées (40). Les secteurs dentés (34 et 37) tournent alors les bras porte-fourches (6) d'environ 90° à l'encontre des ressorts (38), de sorte que les fourches (7) soient sensiblement horizontales. L'exemple de réalisation selon la figure 6 diffère de l'exemple précité en ce que le bâti (1) porte un rail (41) pour le guidage des manivelles (28) sur la partie avant de l'anneau (5). Ce rail (41) est sensiblement parallèle audit anneau (5). Il s'étend à une distance telle de cet anneau (5) qu'il maintient les manivelles (28) en contact avec les premières butées (39). Le rail (41) permet de supprimer les ressorts (38) et assure une plus grande stabilité des bras (6) et des fourches (7) dans la position de râtelage.

Durant le travail, la machine selon l'invention est déplacée dans la direction d'avancement (A) au moyen du tracteur. La courroie (17) est entraînée dans le sens de la flèche (F) par la poulie (18). Elle entraîne alors l'anneau (5) avec les bras porte-fourches (6) dans le même sens de sorte qu'il tourne sur les galets (8) autour de l'axe géométrique (9). Durant cette rotation, les bras porte-fourches (6) qui se situent sur la partie avant de l'anneau (5) ratissent les végétaux qui se trouvent au sol. Lorsqu'ils arrivent dans la partie latérale de l'anneau (5), leurs manivelles (28) entrent en contact avec la courroie (17). Celle-ci déplace alors ces manivelles (28) sur leurs axes (33) jusqu'à ce qu'elles rencontrent les secondes butées (40). Lors de ces déplacements, les secteurs dentés (34 et 37) font pivoter les bras porte-fourches (6) autour de leurs axes longitudinaux (15). Dans l'exemple selon les figures 1 à 5 ces pivotements s'effectuent à l'encontre de la force des ressorts (38). Les fourches (7) sont alors relevées à l'horizontale, de sorte qu'elles déposent les végétaux ratissés sous la forme d'un andain (figure 4). Ces fourches (7) restent dans la position relevée sur toute la partie arrière de l'anneau (5). Ensuite, la courroie (17) est guidée par la poulie (20) de sorte qu'elle s'éloigne de l'anneau (5) et libère les manivelles (28). Simultanément, les ressorts (38) font pivoter les bras (6) autour de leurs axes longitudinaux (15). Lesdits bras (6) entraînent les manivelles (28) correspondantes par l'intermédiaire des secteurs dentés (37 et 34) jusqu'à ce qu'elles rencontrent les premières butées (39). Dans cette position, les fourches (7) se situent à nouveau dans la position de ratissage (figure 3). Dans l'exemple selon la figure 6 c'est le rail (41) qui fait pivoter les manivelles (28) de telle sorte qu'elles fassent pivoter les bras (6) et les fourches (7) dans la position de ratissage.

Il est bien évident que l'invention n'est pas limitée aux modes de réalisation décrits et représentés sur les dessins annexés. Des modifications sont possibles, notamment en ce qui concerne la constitution des divers éléments ou par substitution d'équivalents techniques, sans pour autant sortir du domaine de protection tel que défini dans les revendications.

## Revendications

1. Machine de fenaison, notamment une andaineuse de végétaux, comportant un bâti (1) qui peut être accroché à un tracteur et qui est muni de roues porteuses (3), lequel bâti (1) supporte au moins un rotor d'andainage (4) entraîné en rotation autour d'un axe géométrique (9) vertical ou légèrement incliné par rapport à la verticale et portant des bras porte-fourches (6) qui sont montés pivotants dans des paliers (13, 14) et qui sont actionnés par un organe de commande (16) et des moyens de transmission (27), de telle sorte qu'ils pivotent autour de leurs axes longitudinaux (15) respectifs durant le travail, caractérisée par le fait que le rotor d'andainage (4) se compose d'un anneau (5) qui est monté sur des galets (8) reliés au bâti (1) de manière à pouvoir tourner autour de l'axe géométrique (9) et qui porte les bras porte-fourches (6) dirigés vers l'extérieur, que l'organe de commande (16) est constitué par une courroie (17) ou une chaîne qui est guidée au moyen de poulies (18, 19, 20) portées par le bâti (1) et de pattes (24) qui sont solidaires de l'anneau (5), que les moyens de transmission (27) pour chaque bras porte-fourches (6) sont constitués par une manivelle (28) qui est articulée par rapport à l'anneau (5) et est déplaçable au moyen de la courroie (17) et par un mécanisme de renvoi (29) qui relie ladite manivelle (28) au bras porte-fourches (6) correspondant en vue de le faire tourner autour de son axe longitudinal (15) et que le rotor d'andainage (4) comporte des moyens (38, 41) pour amener les bras porte-fourches (6) en position de râtelage sur une partie avant de l'anneau (5).

2. Machine selon la revendication 1, caractérisée par le fait que la manivelle (28) est déplaçable autour d'un axe (33) sensiblement vertical.

3. Machine selon la revendication 1 ou 2, caractérisée par le fait que la courroie (17) est en contact avec les manivelles (28) et les déplace sur une partie arrière du rotor (4).

4. Machine selon la revendication 1, caractérisée par le fait que la poulie (18) de guidage de la courroie (17) est entraînée en rotation au moyen d'un arbre moteur.

5. Machine selon la revendication 4, caractérisée par le fait que l'anneau (5) du rotor d'andainage (4) est entraîné en rotation au moyen de la courroie (17).

6. Machine selon la revendication 1, caractérisée par le fait que chaque bras porte-fourches (6) est associé à un ressort de torsion (38) dont l'action est dirigée dans la direction opposée à celle de la courroie (17) et qui fait pivoter ledit bras (6) en position de râtelage sur la partie avant de l'anneau (5).

7. Machine selon la revendication 1, caractérisée par le fait que le bâti (1) porte un rail (41) pour le guidage des manivelles (28) sur la partie avant de l'anneau (5) en vue de faire pivoter les bras porte-fourches (6) en position de râtelage.

8. Machine selon l'une quelconque des revendications précédentes, caractérisée par le fait que chaque mécanisme de renvoi (29) se compose d'un premier secteur denté (34) solidaire de la manivelle (28) et d'un second secteur denté (37) solidaire du bras porte-fourches (6) correspondant, ces deux secteurs dentés (34 et 37) engrenant l'un avec l'autre.

9. Machine selon la revendication 2, caractérisée par le fait que l'axe de pivotement (33) sensiblement vertical de chaque manivelle (28) est solidaire d'un support (10) qui porte le bras porte-fourches (6) correspondant et qui est fixé à l'anneau (5).

10. Machine selon la revendication 9, caractérisée par le fait que chaque support (10) comporte deux butées (39, 40) pour la manivelle (28).

## Patentansprüche

1. Heuwerbungsmaschine, insbesondere ein Pflanzenschwader, mit einem Gestell (1), das an einen Traktor gekuppelt werden kann und das mit Stützrädern (3) versehen ist, wobei das Gestell (1) mindestens einen Schwadrotor (4) stützt, der um eine vertikale oder leicht zur Vertikalen geneigte geometrische Achse (9) drehangetrieben wird und Zinkentragarme (6) trägt, welche in Lagern (13, 14) schwenkbar angebracht sind und durch ein Steuerglied (16) und Kraftübertragungsmittel (27) so betätigt werden, daß sie im Betrieb um ihre jeweiligen Längsachsen (15) schwenken, ***dadurch gekennzeichnet,*** daß der Schwadrotor (4) aus einem Ring (5) besteht, der so auf mit dem Gestell (1) verbundenen Rollen (8) angebracht ist, daß er sich um die geometrische Achse (9) drehen kann, und der nach außen gerichtete Zinkentragarme (6) aufweist, daß das Steuerglied (16) aus einem Riemen (17) oder aus einer Kette besteht, der bzw. die mittels vom Gestell (1) getragenen Scheiben (18, 19, 20) und fest mit den Ring (5) verbundenen Halterungen (24) geführt wird, daß die Kraftübertragungsmittel (27) für jeden Zinkentragarm (6) aus einer Kurbel (28), die bezüglich des Rings (5) angelenkt ist und mittels des Riemens (17) bewegt werden kann, und aus einem Umlenkmechanismus (29), der die Kurbel (28) mit dem entsprechenden Zinkentragarm (6) verbindet, um dieser um seine Längsachse (15) zu drehen, bestehen, und daß der Schwadrotor (4) Mittel (38, 41) zur Führung der Zinkentragarme (6) in Rechstellung über einen vorderen Teil des Rings (5) aufweist.

2. Maschine nach Anspruch 1, ***dadurch gekennzeichnet,*** daß die Kurbel (28) um eine im wesentlichen vertikale Achse (33) bewegbar ist.

3. Maschine nach Anspruch 1 oder 2, ***dadurch gekennzeichnet***, daß der Riemen (17) mit den Kurbeln (28) in Kontakt ist und sie über einen hinteren Teil des Rotors (4) betätigt.

4. Maschine nach Anspruch 1, ***dadurch gekennzeichnet,*** daß die Scheibe (18) zur Führung des Riemens (17) mittels einer Antriebswelle drehangetrieben wird.

5. Maschine nach Anspruch 4, ***dadurch gekennzeichnet,*** daß der Ring (5) des Schwadrotors (4) mittels des Riemens (17) drehangetrieben wird.

6. Maschine nach Anspruch 1, ***dadurch gekennzeichnet,*** daß jeder Zinkentragarm (6) einer Torsionsfeder (38) zugeordnet ist, deren Wirkung in die der Richtung des Riemens (17) entgegengesetzte Richtung gerichtet ist und die den Arm (6) über den vorderen Teil des Rings (5) in Rechstellung schwenkt.

7. Maschine nach Anspruch 1, ***dadurch gekennzeichnet****,* daß das Gestell (1) mit einer Schiene (41) zur Führung der Kurbeln (28) über den vorderen Teil des Rings (5) zum Schwenken der Zinkentragarme (6) in Rechstellung versehen ist.

8. Maschine nach irgend einem der vorhergehenden Ansprüche, ***dadurch gekennzeichnet***, daß jeder Umlenkmechanismus (29) aus einem mit der Kurbel (28) fest verbundenen ersten Zahnsegment (34) und einem mit dem entsprechenden Zinkentragarm (6) fest verbundenen zweiten Zahnsegment (37) besteht, wobei diese beiden Zahnsegmente (34 und 37) ineinandergreifen.

9. Maschine nach Anspruch 2, ***dadurch gekennzeichnet***, daß die im wesentlichen vertikale Schwenkachse (33) jeder Kurbel (28) mit einem Träger (10) fest verbunden ist, der den entsprechenden Zinkentragarm (6) trägt und an dem Ring (5) befestigt ist.

10. Maschine nach Anspruch 9, ***dadurch gekennzeichnet,*** daß jeder Träger (10) zwei Anschläge (39, 40) für die Kurbel (28) aufweist.

## Claims

1. Haymaking machine, particularly a crop swather comprising a frame (1) which can be attached to a tractor and which is equipped with carrier wheels (3), which frame (1) supports at least one swathing rotor (4) driven in rotation about a geometric axis (9) which is vertical or slightly inclined with respect to the vertical and carries fork-carrying arms (6) which are mounted to pivot in bearings (13, 14) and which are actuated by an operating member (16) and transmission means (27) so that they pivot about their respective longitudinal axes (15) during work, ***characterized in*** that the swathing rotor (4) is made up of a ring (5) which is mounted on rollers (8) connected to the frame (1) so as to be able to turn about the geometric axis (9) and which carries the outwardly-directed fork-carrying arms (6), in that the operating member (16) consists of a belt (17) or a chain which is guided by means of pulleys (18, 19, 20) carried by the frame (1) and of lugs (24) which are secured to the ring (5), in that the transmission means (27) for each fork-carrying arm (6) consists of a crank (28) which is articulated with respect to the ring (5) and moveable by means of the belt (17) and by a relay mechanism (29) which connects the said crank (28) to the corresponding fork-carrying arm (6) with a view to causing it to rotate about its longitudinal axis (15) and in that the swathing rotor (4) comprises means (38, 41) for bringing the fork-carrying arms (6) into a raking position over a front part of the ring (5).

2. Machine according to Claim 1, ***characterized in*** that the crank (28) is moveable about an approximately vertical axis (33).

3. Machine according to Claim 1 or 2, ***characterized in*** that the belt (17) is in contact with the cranks (28) and moves them over a rear part of the rotor (4).

4. Machine according to Claim 1, ***characterized in*** that the pulley (18) for guiding the belt (17) is driven in rotation by means of a drive shaft.

5. Machine according to Claim 4, ***characterized in*** that the ring (5) of the swathing rotor (4) is driven in rotation by means of the belt (17).

6. Machine according to Claim 1, ***characterized in*** that each fork-carrying arm (6) is associated with a torsion spring (38), the action of which is directed in the opposite direction to that of the belt (17) and which causes the said arm (6) to pivot into the raking position on the front part of the ring (5).

7. Machine according to Claim 1, ***characterized in*** that the frame (1) carries a rail (41) for guiding the cranks (28) on the front part of the ring (5) with a view to causing the fork-carrying arms (6) to pivot into the raking position.

8. Machine according to any one of the preceding claims, ***characterized in*** that each relay mechanism (29) is made up of a first toothed sector (34) secured to the crank (28) and of a second toothed sector (37) secured to the corresponding fork-carrying arm (6), these two toothed sectors (34 and 37) meshing with one another.

9. Machine according to Claim 2, ***characterized in*** that the approximately vertical axis of pivoting (33) of each crank (28) is secured to a support (10) which carries the corresponding fork-carrying arm (6) and which is fixed to the ring (5).

10. Machine according to Claim 9, ***characterized in*** that each support (10) has two stops (39,40) for the crank (28).
